# EUROPEAN PATENT APPLICATION

(11) **EP 4 831 268 A1**
(43) Date of publication of application: **28.10.2026**
(21) Application number: 24906869.3
(22) Date of filing: 07.10.2024
(51) Int. Cl.: C12G 3/04

(54) **ALCOHOLIC BEVERAGE**

(30) Priority: 22.12.2023 JP 2023216608
(71) Applicant: Suntory Holdings Limited, Osaka-shi, Osaka 530-8203 (JP)
(72) Inventor: NAKAJIMA, Mihoko, Kawasaki-shi, Kanagawa 211-0067 (JP)
(74) Representative: Vossius & Partner Patentanwälte Rechtsanwälte mbB
(86) International application number: PCT/JP2024/035738
(87) International publication number: WO 2025/134480

(57) **Abstract**

The purpose of the present invention is to provide an alcoholic beverage in which bitterness caused by leaf alcohol and alcohol is suppressed. The alcoholic beverage comprises 100 ppb to 15000 ppb of leaf alcohol, 50 ppb or more of γ-nonanolactone, and isoamyl alcohol.

## Description

### Technical Field

The present invention relates to a novel alcoholic beverage.

### Background Art

There are various alcoholic beverages with different flavor characteristics on the market. The flavor characteristics of alcoholic beverages are one of the factors that differentiate them from competitive products, and each manufacturer is thus making various efforts and innovations. For example, alcoholic beverages are flavored using aroma components derived from plant raw materials. Patent Literature 1 discloses an alcoholic beverage that has a fresh aroma and a deep flavor imparted by using a plant raw material such as green tea, black tea, and herb, while causing no bitterness derived from the plant raw material to be perceived. Patent Literature 2 discloses that γ-nonanolactone is adjusted to a specific concentration in order to provide an alcoholic beverage, such as beer, having excellent body, fullness, and richness of taste.

### Citation List

### Patent Literature

Patent Literature 1: JP 2007-159502 A
Patent Literature 2: JP 2023-142898 A

### Summary of Invention

### Technical Problem

In order to impart a fresh feeling or the like to an alcoholic beverage, it is conceivable to adjust the concentration of leaf alcohol derived from a plant or the like, but the inventor of the present application has found that leaf alcohol may cause bitterness in combination with alcohol. The present invention aims to provide an alcoholic beverage in which bitterness caused by leaf alcohol and alcohol is suppressed.

### Solution to Problem

As a result of intensive studies, the inventor of the present application has found that a specific component is effective in suppressing bitterness caused by leaf alcohol and alcohol. The present invention has been completed based on such a finding. The present invention provides the following, but is not limited thereto.
(1) An alcoholic beverage, comprising:
   leaf alcohol in an amount of from 100 ppb to 15000 ppb;
   γ-nonanolactone in an amount of 50 ppb or more; and
   isoamyl alcohol.
(2) The alcoholic beverage according to (1), further comprising at least one component selected from the group consisting of linalool, geraniol, and α-terpineol.
(3) The alcoholic beverage according to (1) or (2), wherein the alcoholic beverage is a distilled liquor.
(4) The alcoholic beverage according to any one of (1) to (3), wherein the alcoholic beverage is a shochu.

### Description to implement the invention

### Alcoholic Beverage

The present invention provides an alcoholic beverage. The alcoholic beverage may be, for example, an effervescent liquor, a brewed liquor, a distilled liquor, and a mixed liquor, but is not limited thereto. Examples of the effervescent liquor include beer and low-malt beer. Examples of the brewed liquor include refined sake and fruit wine. Examples of the distilled liquor include shochu (such as barley shochu and sweet potato shochu), continuously distilled shochu, singly distilled shochu, awamori, whisky, brandy, raw alcohol, spirits (e.g., vodka, rum, tequila, gin, aquavit), alcohol for raw materials, and neutral alcohol (also referred to as neutral spirits). Examples of the mixed liquor include synthetic refined sake, sweet fruit wine, and liqueur. Not only those listed herein, but also beverages comprising alcohol in general are applicable to the present invention.

The alcoholic beverage of the present invention comprises leaf alcohol (also referred to as cis-3-hexen-1-ol) as a component. Leaf alcohol is a type of unsaturated alcohol, and is a colorless liquid at normal temperature, which has been discovered and named as an aroma component of green tea. Leaf alcohol is also present in various plants other than green tea and is related to the green aroma of plants. In addition, leaf alcohol is widely used as a flavoring for imparting a fresh aroma to food or the like and for alleviating human fatigue. The leaf alcohol may be present in the alcoholic beverage, for example, in an amount of from 100 ppb to 15000 ppb, from 500 ppb to 15000 ppb, or from 500 ppb to 10000 ppb. It was unexpected that the coexistence of leaf alcohol and alcohol would cause bitterness in an alcoholic beverage. The leaf alcohol may be derived from any raw material used for producing the alcoholic beverage. For example, the leaf alcohol may be leaf alcohol formed through fermentation, processing, or the like of raw materials in the production process, and/or leaf alcohol derived from a flavoring or essence that may be blended as necessary in any step of the production process. The concentration of the leaf alcohol may be adjusted in any step of the process for producing the alcoholic beverage. For example, the concentration of the leaf alcohol may be adjusted before, during, and/or after charging raw materials, fermentation, filtration, distillation, aging, mixing, and/or packaging into containers.

The alcoholic beverage of the present invention comprises γ-nonanolactone (sometimes also referred to as γ-nonalactone) as a component. γ-Nonanolactone is a component that is sometimes used in food products or the like as a coconut flavor. The γ-nonanolactone may be present in the alcoholic beverage, for example, in an amount of 50 ppb or more, 100 ppb or more, or 500 ppb or more. The upper limit of the concentration of the γ-nonanolactone is not particularly limited, and may be, for example, 2500 ppb or less or 2000 ppb or less. Alternatively, the γ-nonanolactone may be present in the alcoholic beverage in an amount of from 50 ppb to 2500 ppb, from 100 ppb to 2500 ppb, from 100 ppb to 2000 ppb, or from 500 ppb to 2000 ppb. The γ-nonanolactone may be derived from any raw material used for producing the alcoholic beverage. For example, the γ-nonanolactone may be γ-nonanolactone formed through fermentation, processing, or the like of raw materials in the production process, and/or γ-nonanolactone derived from a flavoring or essence that may be blended as necessary in any step of the production process. The concentration of the γ-nonanolactone may be adjusted in any step of the process for producing the alcoholic beverage. For example, the concentration of the γ-nonanolactone may be adjusted before, during, and/or after charging raw materials, fermentation, filtration, distillation, aging, mixing, and/or packaging into containers.

The alcoholic beverage of the present invention comprises isoamyl alcohol. Isoamyl alcohol is one of the aroma components of various plants (e.g., jasmine, gardenia, Prunus mume, and the like), and is known to contribute to a sweet aroma. The isoamyl alcohol may be present in the alcoholic beverage even in a very small amount. Accordingly, the concentration of the isoamyl alcohol in the alcoholic beverage is not particularly limited, and may be at any concentration. For example, the isoamyl alcohol may be present in the alcoholic beverage in an amount of 3000 ppm or less, 1000 ppm or less, 500 ppm or less, 100 ppm or less, or 50 ppm or less. In addition, the isoamyl alcohol may be present in the alcoholic beverage in an amount of 10 ppm or more, 100 ppm or more, 500 ppm or more, 1000 ppm or more, or 3000 ppm or more. Furthermore, the isoamyl alcohol may be present in the alcoholic beverage in a certain range, such as from 50 ppm to 3000 ppm, from 100 ppm to 1000 ppm, or from 100 ppm to 500 ppm. The isoamyl alcohol may be derived from any raw material used for producing the alcoholic beverage. For example, the isoamyl alcohol may be isoamyl alcohol formed through fermentation, processing, or the like of raw materials in the production process, and/or isoamyl alcohol derived from a flavoring or essence that may be blended as necessary in any step of the production process. The concentration of the isoamyl alcohol may be adjusted in any step of the process for producing the alcoholic beverage. For example, the concentration of the isoamyl alcohol may be adjusted before, during, and/or after charging raw materials, fermentation, filtration, distillation, aging, mixing, and/or packaging into containers.

The alcoholic beverage of the present invention comprises an alcohol. In the present specification, the term "alcohol" alone means ethanol unless otherwise specified. The alcohol by volume (sometimes also referred to as "alcohol content") of the alcoholic beverage may be 1.0% (v/v) or more, 5% (v/v) or more, 10% (v/v) or more, 12% (v/v) or more, 15% (v/v) or more, 20% (v/v) or more, 25% (v/v) or more, or 30% (v/v) or more, but is preferably 10% (v/v) or more. The alcohol by volume may also be from 1% (v/v) to 60% (v/v), from 5% (v/v) to 60% (v/v), from 10% (v/v) to 60% (v/v), from 10% (v/v) to 50% (v/v), from 15% (v/v) to 50% (v/v), or from 20% (v/v) to 40% (v/v). The alcohol may be derived from any raw material used for producing the alcoholic beverage. For example, the alcohol may be an alcohol formed through fermentation, processing, or the like of raw materials in the production process, and/or an alcohol derived from a flavoring, essence, or alcohol that may be blended as necessary in any step of the production process. The concentration of the alcohol may be adjusted in any step of the process for producing the alcoholic beverage. For example, the concentration of the alcohol may be adjusted before, during, and/or after charging, fermentation, filtration, distillation, aging, mixing, and/or packaging into containers. The alcohol by volume can be set to a desired value by adjusting the distillation conditions, adding an alcohol source having a different alcohol by volume or water, or the like, but the method for setting the alcohol by volume is not limited thereto.

The alcoholic beverage of the present invention may further comprise a terpene compound. The terpene compound may be, for example, at least one component selected from the group consisting of linalool, geraniol, and α-terpineol. The concentrations of these terpene compounds in the alcoholic beverage can be appropriately set. These terpene compounds may be derived from any raw material used for producing the alcoholic beverage. For example, these terpene compounds may be those formed through fermentation, processing, or the like of raw materials in the production process, and/or those derived from a flavoring or essence that may be blended as necessary in any step of the production process. The concentrations of these terpene compounds may be adjusted in any step of the process for producing the alcoholic beverage. For example, the concentrations of these terpene compounds may be adjusted before, during, and/or after charging of raw materials, fermentation, filtration, distillation, aging, and/or packaging into containers.

The alcoholic beverage of the present invention may comprise carbonic acid, or may be free of carbonic acid. When the alcoholic beverage comprises carbonic acid, the carbonic acid can be supplied using a method generally known to those skilled in the art. For example, carbon dioxide may be dissolved in the beverage under pressure; carbon dioxide may be mixed with the beverage in a pipeline using a mixer such as a carbonator; the beverage may be sprayed into a tank filled with carbon dioxide to allow carbon dioxide to be absorbed into the beverage; or alternatively, the beverage may be mixed with carbonated water. The lower limit value of the carbonic acid gas pressure is 1.0 kgf/cm² or more, 1.2 kgf/cm² or more, or 1.3 kgf/cm² or more, and the upper limit value of the carbonic acid gas pressure is 3.0 kgf/cm² or less, 2.7 kgf/cm² or less, or 2.5 kgf/cm² or less. Typically, the carbonic acid gas pressure in the carbonated alcoholic beverage of the present invention is from 1.0 to 3.0 kgf/cm², from 1.2 to 2.7 kgf/cm², from 1.3 to 2.5 kgf/cm² at 20°C.

The alcoholic beverage of the present invention may further comprise a component other than those described above. The alcoholic beverage of the present invention may comprise a component derived from a plant. Examples of the plant include, but are not limited to, fruits, vegetables, herbs, leaves, and flowers. The fruit or vegetable may be the fruit or vegetable itself, or may be a processed fruit or vegetable. For example, fruit juice or vegetable juice obtained by squeezing fruit or vegetable may be used as it is, or concentrated fruit juice or concentrated vegetable juice obtained by concentrating the fruit juice or vegetable juice may be used. Alternatively, it is also possible to use juice, puree, clarified liquid, turbid juice, or extract thereof that is obtained by processing fruit, fruit juice, concentrated fruit juice, vegetable, vegetable juice, or concentrated vegetable juice and from which solid matters such as seeds have been removed.

Examples of the fruit include, but are not limited to, citrus fruits (such as orange, Citrus unshiu, grapefruit, lemon, lime, Citrus junos, Citrus iyo, Citrus natsudaidai, Citrus hassaku, Citrus reticulata var poonensis, flat lemon, and Citrus sphacrocarpa), pome fruits (such as apple and Japanese pear), stone fruits (such as peach, Prunus mume, apricot, plum, and cherry), berries (such as grape, cassis, and blueberry), tropical and subtropical fruits (such as pineapple, guava, banana, mango, and litchi), and fruit vegetables (such as strawberry, melon, and watermelon). Examples of the vegetable include, but are not limited to, tomato, corn, pumpkin, and carrot. One of fruits or vegetables may be used individually, or two or more of fruits or vegetables may be used in combination. The fruit and the vegetable may also be combined.

The leaves of the plant may be the leaves themselves or may be a processed product thereof. For example, the leaves themselves may be used, or an extract liquid obtained from the leaves may be used, or an essence obtained by concentrating the extract liquid of the leaves may be used. The leaves may be raw leaves, dried leaves, fermented leaves, leaves treated with enzymes, leaves treated with microorganisms, or a pulverized product thereof. The leaves include tea leaves. The tea leaves include unfermented tea leaves, semi-fermented tea leaves, and fermented tea leaves. The unfermented tea leaves include green tea leaves, and examples thereof include tea leaves of sencha, gyokuro, kabusecha, bancha, sweet tea, tamaryokucha, Longjing tea, and Huangshan Maofeng tea. The semi-fermented tea includes white tea leaves and blue tea leaves, and examples thereof include leaves of Bai Mudan, Yinzhen Bailong, Wuyi tea, Tieguanyin tea, Shuixian tea, and oolong tea. The fermented tea includes black tea leaves, yellow tea leaves, and dark tea leaves, and examples thereof include leaves of black tea and puerh tea.

The plant (fruits, vegetables, herbs, leaves, flowers, or the like) and a processed product thereof (extracts, essences, concentrates, or the like) as described above may be used in any step of the processes for producing the alcoholic beverage. For example, the plant and a processed product thereof may be used before, during, and/or after charging of raw materials, fermentation, filtration, distillation, aging, and/or packaging into containers, and may be mixed with other raw materials.

The alcoholic beverage of the present invention may further comprise an additive that may be blended in beverages. Examples of the additive include, but are not limited to, a flavoring agent, a vitamin, a coloring agent, an antioxidant, a preservative, a seasoning, an essence, a pH adjuster, and a quality stabilizer.

The alcoholic beverage of the present invention can be provided in a packaged form. The packaged beverage is advantageous because it can be stably stored for a long period of time. A container of the packaged beverage is not particularly limited, and any commonly used container such as a metal container, a resin container, a paper container, or a glass container can be used. Examples of the package include, but are not limited to, an aluminum can, a steel can, a PET bottle, a paper pack, a glass bottle, a barrel, a ceramic container, and a pouch. The alcoholic beverage may be sterilized as appropriate. The sterilization method is not particularly limited, and examples thereof include a method in which the alcoholic beverage is filled into a container and then subjected to heat sterilization such as retort sterilization; and a method in which the beverage is sterilized and filled into a container.

### Component Analysis

The components of the alcoholic beverage of the present invention and raw materials used for the production thereof can be analyzed by the following method.

### (1) Alcohol by Volume

In the present specification, the alcohol by volume can be measured by any known method. For example, the alcohol by volume can be measured using a vibrating densitometer. More specifically, the alcohol by volume is determined by preparing a sample from an alcoholic beverage to be measured by removing carbonic acid gas using filtration or ultrasonic treatment, distilling the prepared sample over direct heat, measuring the density of the resulting distillate at 15°C, and converting the density using "Table 2. Conversion Table of Alcohol Content, Density (15°C), and Specific Gravity (15/15°C)", which is an attached table of the Official Analysis Method of the National Tax Agency in Japan (2007 National Tax Agency Order No. 6, revised on June 22, 2007). The alcohol by volume of less than 1.0% (v/v) can be measured using "B) Gas Chromatographic Analysis Method" described in the Official Analysis Method of the National Tax Agency in Japan, 3-4 (Alcohol Content).

### (2) Analysis of Leaf Alcohol (cis-3-hexen-1-ol) and Terpene Compounds (Linalool, Geraniol, α-Terpineol, and the Like)

In the present specification, a method for measuring the content of these components is not particularly limited, and a known method can be appropriately selected and used. For example, it is preferable to measure the content using GC-MS. For example, these components can be analyzed by gas chromatography/mass spectrometry (GC/MS) set under the following conditions.

### GC/MS Measurement Conditions

- Column: HP-INNOWAX (0.25 mm I.D. × 60 m, film thickness: 0.25 µm)
- Vaporization chamber temperature: 200°C
- Temperature program: 50°C (1 min)
   50°C → 240°C (3°C/min)
   240°C (5 min)
- Split ratio: 1:2
- Linear velocity: 30.0 cm/s (constant)
- Carrier gas: He
- Ion source temperature: 200°C
- Transfer temperature: 240°C.

### (3) Analysis of γ-Nonanolactone

### GC/MS Conditions (Full Evaporation Dynamic Headspace (FE-DHS) Injection Method)

- Apparatus: 7890B (GC) and 5977B (MS) available from Agilent Technologies, Inc., MultiPurpose Sampler (auto-sampler) available from Gester GmbH & Co.KG
- Adsorption resin: TENAX
- Incubation temperature: 80°C
- Nitrogen gas purge amount: 3 L
- Nitrogen gas purge flow rate: 100 mL/min
- TDU: [30°C] - [210°C/min] - [240°C (3 min)]
- CIS: [10°C] - [120°C/sec] - [240°C] (liner filler: TENAX)
- Column: DB-WAX (30 m × 250 µm × 0.25 µm) available from GESTEL GmbH & Co.KG
- Column temperature: [40°C (3 min)] - [5°C/min] - [240°C (7 min)]
- Carrier gas: He
- Transfer line: 250°C
- Ion source temperature: 230°C
- Scan parameter: m/z = from 28.7 to 300
- Split: None.

### (4) Analysis of Isoamyl Alcohol

- GC system: 8860GC/FID
- Inlet
- Split/splitless, 250°C, split ratio 30:1
- Liner: Ultra Inert (p/n 5190-2295)
- Column: J&W DB-FATWAX Ultra Inert, 30 m × 0.25 mm, 0.25 µm (p/n G3903-63008)
- Carrier gas: Helium, constant flow rate of 1 mL/min
- Oven
   40°C (4 minutes)
   The temperature is raised to 100°C at 5°C/min.
   The temperature is raised to 200°C at 10°C/min (10 minutes).
- FID: 250°C
- Hydrogen: 30 mL/min
- Air: 300 mL/min
- Make-up gas (N₂): 25 mL/min
- Injection: 0.5 µL

### (5) Carbonic Acid Gas Pressure

The carbonic acid gas pressure in the beverage can be measured by a method known to those skilled in the art. For example, the carbonic acid gas pressure can be measured using Gas Volume Analyzer GVA-500A available from Kyoto Electronics Manufacturing Co., Ltd. For example, the temperature of a sample is set to 20°C, and the sample is subjected to degassing (snifting) and shaking in the air in the container of the Gas Volume Analyzer. Subsequently, the carbonic acid gas pressure is measured. In the present specification, the carbonic acid gas pressure is measured by this method unless otherwise specified.

### Advantageous Effects of Invention

The present invention can suppress bitterness caused by leaf alcohol and alcohol in an alcoholic beverage. The occurrence of such bitterness and the relationship between the bitterness and γ-nonanolactone and/or isoamyl alcohol are not known. By adjusting the concentration of γ-nonanolactone to a specific range, bitterness can be suppressed without impairing the palatability.

### Examples

Specific examples of the present invention are provided below. The following specific examples are intended to understand the present invention, and are not intended to limit the scope of the present invention to the specific examples.

### Test Example 1: Occurrence of Bitterness Due to Leaf Alcohol and Alcohol

The effect of leaf alcohol and alcohol on the bitterness of an alcoholic beverage was confirmed.

To a commercially available neutral alcohol, pure water was added to adjust the alcohol by volume to each content listed in Table 1 below. In this solution, leaf alcohol (cis-3-hexen-1-ol (available from Tokyo Chemical Industry Co., Ltd.)) was dissolved so as to have each content listed in Table 1 below, thereby preparing each sample. The bitterness intensity of each of the obtained samples was evaluated by six trained panelists through a sensory test based on the following criteria. Before the sensory test, pure water (without addition of leaf alcohol) and a solution in which leaf alcohol was dissolved at 15000 ppb in a 60 v/v% alcohol water were prepared, and the six trained panelists confirmed that the former should be evaluated as 1 point and the latter should be evaluated as 6 points, and scored the bitterness of samples based on these criteria.

### Sensory Test Evaluation Criteria

6 points: Strongly perceived
5 points: Perceived
4 points: Slightly perceived
3 points: Weakly perceived
2 points: Hardly perceived
1 point: Not perceived at all

The average score was calculated from the evaluation scores assigned by the six panelists, and the following five-grade rating was assigned according to the average score.
Average score of 1 or more and less than 2: "-"
Average score of 2 or more and less than 3: "±"
Average score of 3 or more and less than 4: "+"
Average score of 4 or more and less than 5: "++"
Average score of 5 or more: "+++"

**Table 1**

| Sample No. | Alcohol content (v/v%) | Leaf alcohol content ppb | Bitterness intensity |
|---|---|---|---|
| 1 | 0 | 0 | - |
| 2 | | 100 | - |
| 3 | | 500 | - |
| 4 | | 5000 | - |
| 5 | | 10000 | ± |
| 6 | | 15000 | ± |
| 7 | 10 | 0 | - |
| 8 | | 100 | + |
| 9 | | 500 | + |
| 10 | | 5000 | ++ |
| 11 | | 10000 | +++ |
| 12 | | 15000 | +++ |
| 13 | 40 | 0 | - |
| 14 | | 100 | + |
| 15 | | 500 | ++ |
| 16 | | 5000 | +++ |
| 17 | | 10000 | +++ |
| 18 | | 15000 | +++ |
| 19 | 60 | 0 | - |
| 20 | | 100 | ++ |
| 21 | | 500 | +++ |
| 22 | | 5000 | +++ |
| 23 | | 10000 | +++ |
| 24 | | 15000 | +++ |

The following was confirmed from the results shown in Table 1. In the samples containing no alcohol, no bitterness or substantially no bitterness was perceived even in the presence of leaf alcohol. In the samples containing alcohol, the presence of leaf alcohol resulted in the bitterness being perceived. It was demonstrated that the higher the alcohol by volume and the leaf alcohol concentration of the sample, the stronger the bitterness tended to be perceived. From these results, it was found that alcohol and leaf alcohol in combination cause bitterness in the alcoholic beverage.

### Example 1: Bitterness-Suppressing Effect of Isoamyl Alcohol

To a commercially available neutral alcohol, pure water was added to adjust the alcohol by volume to each content listed in Table 2 below. In this solution, leaf alcohol was dissolved so as to be 10000 ppb, and isoamyl alcohol (FUJIFILM Wako Pure Chemical Corporation) was dissolved so as to be 100 ppm, 500 ppm, 1000 ppm, or 3000 ppm, thereby preparing each sample. The bitterness intensity of each of the obtained samples was sensorily evaluated by six trained panelists according to the criteria provided in Test Example 1.

**Table 2**

| Sample No. | Alcohol content (v/v%) | Leaf alcohol content ppb | Isoamyl alcohol content ppm | Bitterness intensity |
|---|---|---|---|---|
| 25 | 40 | | 0 | +++ |
| 26 | | | 100 | + |
| 27 | | | 500 | + |
| 28 | | | 1000 | + |
| 29 | | 10000 | 3000 | + |
| 30 | 60 | | 0 | +++ |
| 31 | | | 100 | + |
| 32 | | | 500 | + |
| 33 | | | 1000 | + |
| 34 | | | 3000 | + |

The results in Table 2 demonstrate that the bitterness could be suppressed by incorporating isoamyl alcohol. Isoamyl alcohol exhibited comparable bitterness-suppressing effects at all concentrations tested.

### Example 2: Effect of γ-Nonanolactone

To a commercially available neutral alcohol, pure water was added to adjust the alcohol by volume to each content listed in Table 3 below. In this solution, leaf alcohol, isoamyl alcohol, and γ-nonanolactone were dissolved at each concentration listed in Table 3, thereby preparing each sample.

The bitterness intensity of each of the obtained samples was sensorily evaluated by six trained panelists according to the criteria provided in Test Example 1.

The palatability of each of the obtained samples as a beverage was sensorily evaluated by trained panelists. The palatability was evaluated from the viewpoint of whether or not a refreshing flavor was perceived and whether or not there were an unnatural flavor and an off-flavor and off-odor. Scores ranging from 6 points to 1 point were assigned in descending order of the palatability evaluation. It was confirmed in advance that 3 points would be set as a passing score.

### Evaluation Criteria for Sensory Test of Palatability

Not perceived: 1 point
Faintly perceived: 2 points
Slightly perceived: 3 points
Perceived: 4 points
Strongly perceived: 5 points
Very strongly perceived: 6 points

The average score was calculated from the evaluation scores assigned by the six panelists, and the following five-grade rating was assigned according to the average score.
Average score of 1 or more and less than 2: "-"
Average score of 2 or more and less than 3: "±"
Average score of 3 or more and less than 4: "+"
Average score of 4 or more and less than 5: "++"
Average score of 5 or more: "+++".

When the rating of bitterness suppression was "+" or less and the rating of palatability was "+" or higher, the sample was regarded as passing. When the rating of palatability was "++" or higher, the sample was regarded as superior.

**Table 3**

| Sample No. | Alcohol content (v/v%) | Leaf alcohol content ppb | Isoamyl alcohol ppm | γ-Nonanolactone (ppb) | Bitterness intensity | Palatability as beverage | Comments |
|---|---|---|---|---|---|---|---|
| 35 | 10 | | | 0 | ± | ± | A bitterness-masking effect was slightly perceived. |
| 36 | | | | 100 | ± | + | A bitterness-masking effect was perceived, and the taste was milder than that of Sample No. 35. |
| 37 | | | | 500 | ± | + | A bitterness-masking effect was high. The body was also perceived, and the sample was palatable. |
| 38 | | | | 1000 | + | +++ | The bitterness was masked, providing good drinkability, and a refreshing quality derived from leaf alcohol was perceived. |
| 39 | | | | 2000 | - | ++ | The bitterness was masked, providing good drinkability. The γ-nonanolactone character was also perceived. |
| 40 | | 500 | 100 | 2500 | - | ± | The bitterness was masked, but the γ-nonanolactone character was enhanced. |
| 41 | 40 | | | 0 | + | ± | A bitterness-masking effect was slightly perceived. |
| 42 | | | | 100 | ± | + | A bitterness-masking effect was perceived, and the taste was milder than that of Sample No. 35. |
| 43 | | | | 500 | ± | + | A bitterness-masking effect was high. The body was also perceived, and the sample was palatable. |
| 44 | | | | 1000 | + | +++ | The bitterness was masked, providing good drinkability, and a refreshing quality derived from leaf alcohol was perceived. |
| 45 | | | | 2000 | - | ++ | The bitterness was masked, providing good drinkability. The γ-nonanolactone character was also perceived. |
| 46 | | | | 2500 | - | ± | The bitterness was masked, but the γ-nonanolactone character was enhanced. |
| 54 | | 5000 | | 0 | + | ± | The sample had a refreshing aroma derived from leaf alcohol as compared with Sample No. 41. The bitterness was slightly masked. |
| 55 | | | | 100 | ± | + | A slightly stronger bitterness-masking effect was perceived as compared with Sample No. 54. |
| 56 | | | | 500 | ± | + | A bitterness-masking effect was perceived. |
| 57 | | | | 1000 | ± | ++ | The bitterness was masked, and a refreshing quality derived from leaf alcohol was perceived. |
| 58 | | | | 2000 | ± | +++ | The bitterness was masked, providing good drinkability, and a refreshing quality derived from leaf alcohol was perceived. |
| 59 | | | | 2500 | - | ± | The bitterness was masked, but the γ-nonanolactone character was enhanced. |
| 67 | 60 | | | 0 | + | ± | The bitterness was slightly masked. |
| 68 | | | | 100 | ± | + | A bitterness-masking effect was perceived. |
| 69 | | | | 500 | ± | + | A bitterness-masking effect as well as a refreshing quality was perceived, which is preferable. |
| 70 | | | | 1000 | ± | + | The bitterness was masked, and a refreshing quality derived from leaf alcohol was perceived. |
| 71 | | | | 2000 | ± | +++ | The bitterness was masked, providing good drinkability, and a refreshing quality derived from leaf alcohol was perceived. |
| 72 | | | | 2500 | - | ± | The bitterness was masked, but the γ-nonanolactone character was enhanced. |
| 67 | | 10000 | | 0 | + | ± | A refreshing aroma from leaf alcohol was stronger than that of Sample No. 67. The bitterness was slightly masked. |
| 68 | | | | 100 | ± | + | A stronger bitterness-masking effect was perceived as compared with Sample No. 67. |
| 69 | | | | 500 | ± | + | A bitterness-masking effect was perceived, and the sample had a refreshing quality, which is preferable. |
| 70 | | | | 1000 | ± | ++ | The bitterness was more masked as compared with Sample No. 69, which is preferable. |
| 71 | | | | 2000 | ± | +++ | The bitterness was masked. A refreshing quality derived from leaf alcohol was perceived. |
| 72 | | | | 2500 | - | ± | The bitterness was masked, but the γ-nonanolactone character was enhanced. |

The results in Table 3 demonstrate that the bitterness could be suppressed by incorporating γ-nonanolactone. Although the bitterness-suppressing effect tended to increase slightly as the γ-nonanolactone concentration increased, bitterness could be suppressed at all concentrations. It can be seen that the effect is obtained ify-nonanolactone is present at a concentration of at least 100 ppb.

On the other hand, when the γ-nonanolactone concentration was too high, the rating of palatability as a beverage tended to be rather low. From the aspect of palatability, it is suggested that the γ-nonanolactone concentration may be set to be less than 2500 ppb, or equal to or less than 2000 ppb.

## Claims

1. An alcoholic beverage, comprising:
leaf alcohol in an amount of from 100 ppb to 15000 ppb;
γ-nonanolactone in an amount of 50 ppb or more; and
isoamyl alcohol.

2. The alcoholic beverage according to claim 1, further comprising at least one component selected from the group consisting of linalool, geraniol, and α-terpineol.

3. The alcoholic beverage according to claim 1, wherein the alcoholic beverage is a distilled liquor.

4. The alcoholic beverage according to any one of claims 1 to 3, wherein the alcoholic beverage is a shochu.
